Europäisches Patentamt

European Patent Office

Office européen des brevets

(19)

(11) Numéro de publication : **0 089 622**
**B1**

(12) **FASCICULE DE BREVET EUROPÉEN**

(45) Date de publication du fascicule du brevet :
07.05.86

(51) Int. Cl.⁴ : **H 02 G   1/08, H 02 G   1/06**

(21) Numéro de dépôt : **83102629.9**

(22) Date de dépôt : **17.03.83**

(54) Machine de tirage d'éléments cylindriques de grande longueur.

(30) Priorité : 23.03.82 FR 8204882

(43) Date de publication de la demande :
28.09.83 Bulletin 83/39

(45) Mention de la délivrance du brevet :
07.05.86 Bulletin 86/19

(84) Etats contractants désignés :
BE CH DE FR GB IT LI NL SE

(56) Documents cités :
FR-A- 2 259 460
FR-A- 2 434 502
FR-A- 2 450 775
PATENTS ABSTRACTS OF JAPAN, section E, vol. 1, no. 124, 18 octobre 1977, page 5218E77
MACHINE DESIGN, vol. 47, no. 23, 18 septembre 1975, page 49, Penton Cleveland, USA, "Soft pulleys swallow lumps in rope"

(73) Titulaire : **LES CABLES DE LYON Société anonyme dite:**
**170 quai de Clichy**
**F-92111 Clichy Cedex (FR)**

(72) Inventeur : **Mattelon, Jean-Claude**
**10, rue Richan**
**F-69004 Lyon (FR)**
Inventeur : **Chauzu, Albert**
**10, avenue Lucien Buisson**
**F-69330 Meyzieu (FR)**

(74) Mandataire : **Weinmiller, Jürgen et al**
**Zeppelinstrasse 63**
**D-8000 München 80 (DE)**

## Description

La présente invention concerne une machine de tirage d'un élément cylindrique de grande longueur à l'intérieur d'une canalisation comprenant un treuil sur lequel s'enroule une corde de tirage reliée à un élément cylindrique par une tête de tirage, un ou plusieurs dispositifs auxiliaires de tirage séparés et disposés en des points d'accès de la canalisation, chaque dispositif comprenant des galets d'entraînement.

La mise en place d'éléments cylindriques de grande longueur, en particulier de câbles téléphoniques, à l'intérieur de canalisations, est généralement réalisée par la traction d'une extrémité d'un élément au moyen d'une corde reliée à un dispositif de tirage genre treuil ou cabestan.

Cette opération se heurte rapidement à une difficulté essentielle qui est l'accroissement de la force de traction nécessaire pour vaincre les frottements existant entre un élément tiré et la paroi d'une canalisation. Cette force de traction peut devenir supérieure à la résistance de l'élément et provoquer la rupture de celui-ci.

Par exemple, un câble à fibres optiques courant ne peut supporter un effort de traction supérieur à 1 300 N et pour des distances de tirage de l'ordre de 600 m la force nécessaire à la traction d'un câble est de 20 000 N.

On pourrait bien entendu tirer des tronçons de câbles plus courts, mais dans ce cas, il faut un nombre important d'épissures le long de la ligne, qui provoquerait une atténuation dans la transmission, et il faut de plus un nombre plus grand de points d'accès à la canalisation.

Le document FR-A-2.450.775 décrit une installation utilisant des dispositifs auxiliaires, disposés aux points d'accès d'une canalisation, entraînés par un moteur électrique et synchronisés par un tableau de commande relié à chacun d'eux par un câble électrique limitant ainsi l'emploi de ces dispositifs à de courtes distances.

L'entraînement d'un élément peut être réalisé par des galets, des chenilles ou des roues à pneu comme dans le document FR-A-2.259.460.

La présente invention a pour but de rendre indépendant et autorégulateur chaque dispositif auxiliaire placé le long d'une canalisation.

Pour les câbles, on place généralement ces dispositifs auxiliaires aux coudes existant dans chaque canalisation, lesdites canalisations présentant rarement une partie rectiligne importante.

Un autre but de l'invention est d'améliorer la précision de la mesure de l'effort de traction car dans les appareils de tirage classiques, la force de traction est mesurée sur le treuil ce qui engendre des erreurs de mesure d'environ 40 %.

La machine de tirage selon l'invention est caractérisée en ce que la tête de tirage est munie d'un capteur relié à un appareil de régulation, apte à limiter la vitesse de rotation du tambour, par l'intermédiaire de fils conducteurs contenus dans la corde de tirage, et en ce que chaque dispositif auxiliaire de tirage comprend une pompe à débit variable commandant un moteur hydraulique dont l'arbre de sortie assure la rotation des galets d'entraînement par l'intermédiaire d'embrayages.

Il est décrit ci-après à titre d'exemple, et en référence aux figures du dessin annexé une machine selon l'invention.

La figure 1 montre une installation générale de tirage où un seul dispositif auxiliaire faisant partie d'une machine selon l'invention est représenté.

La figure 2 représente la transmission d'un dispositif auxiliaire de tirage selon l'invention en vue de dessus, couvercle inférieur enlevé.

La figure 3 représente la position de l'élément cylindrique entre les deux galets, et le montage mécanique d'un galet et de son embrayage qui est dans ce cas de type à roue libre.

La figure 4 représente une roue libre et une chaîne d'entraînement en vue de dessus de la figure 3, galet et plaque supérieure enlevés.

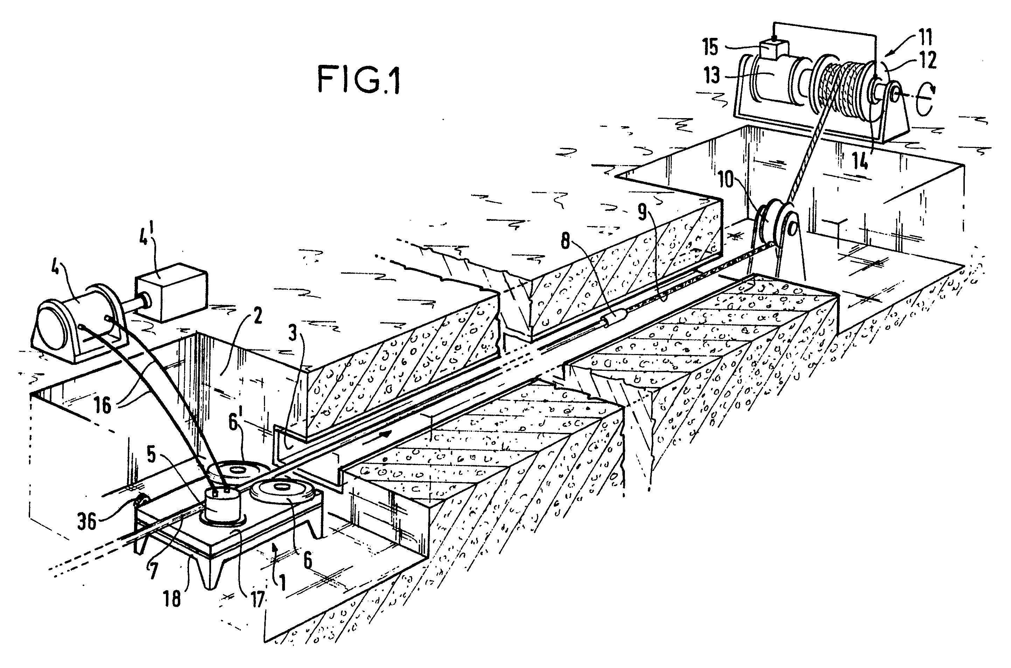

Dans la figure 1, un dispositif auxiliaire de tirage 1 est mis en place dans un point d'accès 2 de la canalisation 3. Ce dispositif comprend une plaque supérieure 17 et un couvercle inférieur 18. Une pompe hydraulique 4 à débit variable, entraînée par un moteur 4', qui peut être un moteur thermique ou un moteur électrique alimenté par un groupe électrogène, est reliée par des canalisations souples 16 à un moteur hydraulique 5 qui entraîne par l'intermédiaire d'un mécanisme décrit ci-après, des galets d'entraînement 6, 6'. Un élément cylindrique 7 passe entre les deux galets d'entraînement et se raccorde à une tête de tirage 8. Une corde de tirage 9, reliée par une de ses extrémités à la tête de tirage 8 passe sur une poulie 10 pour s'enrouler ensuite sur le tambour 12 d'un treuil 11. Le treuil comprend également un moteur 13, un contact tournant 14 situé sur l'axe du tambour, un appareil de régulation électronique 15.

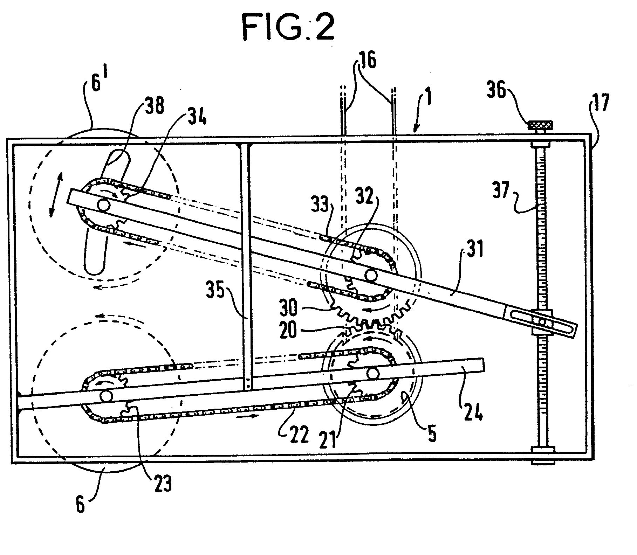

Dans la figure 2, le dispositif auxiliaire de tirage 1 est vu de dessous, le couvercle inférieur 18 étant enlevé. Le moteur hydraulique recevant un fluide de travail par l'intermédiaire des tuyaux 16, est situé sur le même axe que l'engrenage 20 et que la roue dentée 21 qui entraîne par l'intermédiaire d'une chaîne 22, une autre roue dentée 23 elle-même située sur l'axe du galet d'entraînement 6. Cette première transmission est fixe sur une barre 24. L'engrenage 20 entraîne un même engrenage 30 situé sur l'axe de rotation d'une barre 31. Une roue dentée 32 entraîne par l'intermédiaire d'une chaîne 33 une autre roue dentée 34 située sur l'axe du galet d'entraînement 6'.

Une barre 35 supporte la barre 31 pour éviter une flexion excessive de celle-ci. La rotation de la barre 31, est assurée par un bouton molleté 36 monté en bout d'une barre filetée 37, et permet un réglage de la pression de serrage de l'élément cylindrique entre les deux galets 6, 6'. Le galet 6' se déplace dans une lumière 38.

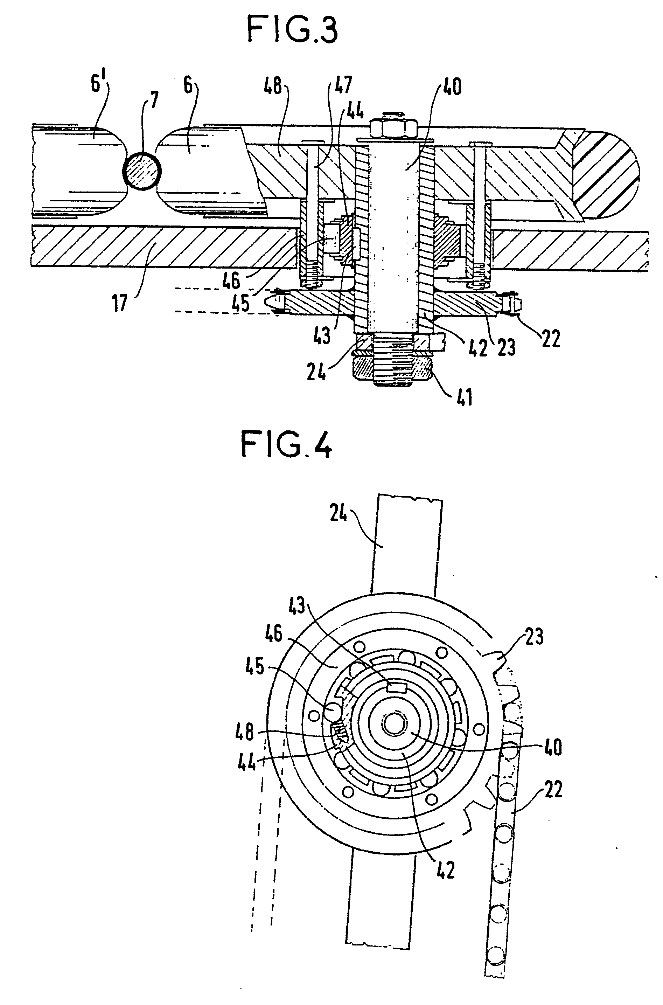

Dans la figure 3, l'élément cylindrique 7 passe entre les deux galets d'entraînement 6, 6'. L'axe de rotation 40 du galet 6 est fixé sur la barre 24 par un boulon 41. La chaîne 22 entraîne la roue dentée 23 solidaire d'une bague 42. Une clavette 43 assure la rotation de la cage intérieure 44 de la roue libre. Cette roue libre comprend également des rouleaux 45 et une cage extérieure 46 rendue solidaire d'un flasque 48 du galet 6 par des boulons 47.

Dans la figure 4 une coupe partielle de la roue libre montre que les rouleaux 45 sont poussés par des ressorts 48.

Le fonctionnement de la machine selon l'invention est le suivant :

En début de tirage, la force nécessaire à la traction de l'élément est faible, car les frottements sont peu importants. Le treuil entraîne donc l'élément cylindrique à une vitesse de défilement importante.

La vitesse de défilement est cependant contrôlée car au-delà d'une certaine limite, l'effort de traction sur l'élément cylindrique peut devenir trop important. La tête de tirage comporte donc un capteur qui délivre un signal à l'appareil de régulation électronique par l'intermédiaire d'un équipement électronique, de fils conducteurs passant dans la corde de tirage et d'un contact tournant placé sur le tambour du treuil. L'appareil de régulation électronique limite la vitesse de rotation du tambour donc la vitesse de défilement. Le montage du capteur dans la tête de tirage permet de limiter les risques d'erreurs dans la mesure de la force de traction.

La pression dans chaque pompe à débit variable est réglée par avance pour entraîner l'arbre de sortie de chaque moteur hydraulique à une vitesse constante. Les galets sont donc entraînés par l'élément cylindrique et désacouplés de l'arbre moteur tournant plus lentement, par la roue libre. Au fur et à mesure du tirage, les frottements de l'élément dans la canalisation augmentent, la vitesse de défilement diminue et la vitesse de rotation des galets décroît jusqu'à ce qu'elle devienne égale à la vitesse de rotation des arbres moteurs de chaque dispositif. C'est à ce moment précis que les dispositifs auxiliaires entrent en action en répartissant l'effort de traction tout le long de l'élément.

D'autre part la pression dans chaque pompe à débit variable est réglée par avance pour supprimer l'action de chaque dispositif auxiliaire en cas d'arrêt du treuil. En effet, pour éviter tout risque de détérioration ou de bourrage de l'élément dans la canalisation, en cas d'arrêt du treuil, la force d'entraînement des galets doit être insuffisante pour faire avancer l'élément. Le principe même du moteur hydraulique fait qu'il n'y aura pas d'échauffement, ainsi qu'il apparaîtrait dans un moteur électrique.

Sans sortir du cadre de l'invention, les galets peuvent disposer d'un embrayage autre qu'une roue libre, et la transmission d'informations entre le capteur placé dans la tête de tirage et l'appareil de régulation électronique peut se faire par ondes radio-électriques, le capteur comportant alors un émetteur et son alimentation.

## Revendications

1. Machine de tirage d'un élément cylindrique (7) de grande longueur à l'intérieur d'une canalisation (3), comprenant un treuil (11) sur lequel s'enroule une corde (9) de tirage reliée à l'élément cylindrique par une tête de tirage (8), un ou plusieurs dispositifs auxiliaires (1) de tirage séparés et disposés en des points d'accès (2) de la canalisation, chaque dispositif comprenant des galets (6, 6') d'entraînement, caractérisée en ce que la tête de tirage (8) est munie d'un capteur relié à un appareil de régulation (15) apte à limiter la vitesse de rotation du tambour (12), par l'intermédiaire de fils conducteurs contenus dans la corde de tirage (9), et en ce que chaque dispositif (1) auxiliaire de tirage comprend une pompe (4) à débit variable commandant un moteur hydraulique (5) dont l'arbre de sortie assure la rotation des galets d'entraînement (6, 6') par l'intermédiaire d'embrayages.

2. Machine de tirage selon la revendication 1, caractérisée en ce que la pression dans chaque pompe (4) à débit variable est réglée par avance pour entraîner l'arbre de sortie de chaque moteur hydraulique (5) à une vitesse constante.

3. Machine de tirage selon la revendication 1, caractérisée en ce que la pression dans chaque pompe (4) à débit variable est réglée par avance pour supprimer l'action de chaque dispositif auxiliaire (1) en cas d'arrêt du treuil (11).

## Claims

1. A machine for hauling a cylindrical element (7) of great length inside a duct (3), comprising a winch (11) on which is wound a haulage rope (9) which is connected to the cylindrical element by a haulage head (8), one or several separate auxiliary haulage devices (1) which are disposed at points of access (2) to the duct, each device comprising drive rollers (6, 6'), characterized in that the haulage head (8) is supplied with a probe connected to a regulation apparatus (15) capable of limiting the rotation speed of the drum (12) via conductive wires contained in the haulage rope (9), and that each auxiliary haulage device (1) comprises a pump (4) with variable flow rate controlling a hydraulic motor (5) the output shaft of which ensures the rotation of the drive rollers (6, 6') via clutches.

2. A haulage machine according to claim 1, characterized in that the pressure in each pump (4) with variable flow rate is adjusted in advance in order to drive the output shaft of each hydraulic motor (5) at a constant speed.

3. A haulage machine according to claim 1, characterized in that the pressure in each pump (4) with variable flow rate is adjusted in advance so as to suppress the action of each auxiliary device (1) in the case of stoppage of the winch (11).

**Patentansprüche**

1. Maschine zum Ziehen eines zylindrischen Elements (7) großer Länge im Inneren eines Kanals (3), mit einer Winde (11), auf der ein Zugseil (9) aufgewickelt ist, das über einen Ziehkopf (8) mit dem zylindrischen Element verbunden ist, mit einem oder mehreren getrennten Hilfs-Ziehvorrichtungen (1), die an Zugangspunkten (2) des Kanals angeordnet sind, wobei jede Vorrichtung Antriebsrollen (6, 6') aufweist, dadurch gekennzeichnet, daß der Ziehkopf (8) mit einer Sonde versehen ist, die mit einem Regelungsgerät (15) verbunden ist, welches die Drehgeschwindigkeit der Trommel (12) über in dem Zugseil (9) enthaltene leitende Drähte begrenzen kann, und daß jede Hilfs-Ziehvorrichtung eine Pumpe (4) mit variablem Durchsatz aufweist, die einen hydraulischen Motor (5) steuert, dessen Ausgangswelle die Drehung der Antriebsrollen (6, 6') über Kupplungen bewirkt.

2. Ziehmaschine nach Anspruch 1, dadurch gekennzeichnet, daß der Druck in jeder Pumpe (4) mit variablem Durchsatz vorher so eingestellt ist, daß die Ausgangswelle jedes hydraulischen Motors (5) mit einer konstanten Geschwindigkeit angetrieben wird.

3. Ziehmaschine nach Anspruch 1, dadurch gekennzeichnet, daß der Druck in jeder Pumpe (4) mit variablem Durchsatz vorher so eingestellt wird, daß im Fall des Anhaltens der Winde (11) der jeder Wirkung Hilfsvorrichtung (1) unterdrückt wird.

FIG.1

## FIG.2

# FIG.3

# FIG.4